# EUROPÄISCHE PATENTSCHRIFT

(11) **EP 3 785 005 B1**
(45) Veröffentlichungstag und Bekanntmachung des Hinweises auf die Patenterteilung: **13.07.2022**
(21) Anmeldenummer: 19717436.0
(22) Anmeldetag: 03.04.2019
(51) Int. Cl.: G01M 13/005

(54) **VORRICHTUNG, INSBESONDERE PRÜFVORRICHTUNG, UND PRÜFSTAND**
DEVICE, IN PARTICULAR TESTING DEVICE, AND TEST STAND
DISPOSITIF, NOTAMMENT DISPOSITIF D'ESSAI, ET BANC D'ESSAI

(30) Priorität: 23.04.2018 DE 102018003293
(43) Veröffentlichungstag der Anmeldung: 03.03.2021
(73) Patentinhaber: SEW-EURODRIVE GmbH & Co. KG, 76646 Bruchsal (DE)
(72) Erfinder: HÜTTINGER, Alexander, 75245 Neulingen (DE); SCHÜTTERLE, Ingo, 76646 Bruchsal (DE); WEISENBURGER, Julia, 68753 Waghäusel (DE); WÖPPERMANN, Markus, 76307 Karlsbad (DE)
(86) Internationale Anmeldenummer: PCT/EP2019/025099
(87) Internationale Veröffentlichungsnummer: WO 2019/206453

(56) Entgegenhaltungen:
- DE-C1- 10 113 591
- DE-U1- 29 909 737
- US-A- 3 176 497

## Beschreibung

Die Erfindung betrifft eine Vorrichtung, insbesondere Prüfvorrichtung, und einen Prüfstand.

Es ist allgemein bekannt, dass eine Prüfvorrichtung zum Prüfen eines Prüflings geeignet ausgeführt ist.

Aus der US 3 176 497 A ist eine Prüfvorrichtung für Dichtungen bekannt.

**Aus der** US 5 814 717 A **ist eine Öldichtungstestvorrichtung bekannt.**

**Aus der** CN 103630301 A **ist eine Prüfvorrichtung für eine Flüssigkeitsgeschmierte Dichtung** bekannt.

Aus der CN 202049005 U ist eine Reibmomenttestvorrichtung für eine Dichtlippe eines Wellendichtrings bekannt.

Aus der DE 101 13 591 C1 ist als nächstliegender Stand der Technik eine Prüfvorrichtung zur Untersuchunge des Verhaltens von Wellendichtsystemen bekannt.

**Aus der** DE 299 09 737 U1 **ist eine Einrichtung zur Untersuchung des Reibungs- und Verschleißverhaltens von Wellendichtungen bekannt.**

Der Erfindung liegt daher die Aufgabe zugrunde, eine Prüfvorrichtung zum Prüfen eines Wellendichtrings weiterzubilden.

Erfindungsgemäß wird die Aufgabe bei der Vorrichtung nach den in Anspruch 1 und bei dem Prüfstand nach den in Anspruch 11 angegebenen Merkmalen gelöst.

Von Vorteil ist dabei, dass eine Temperierung, wie Kühlung oder Erwärmung, des Kammergehäuses berührungslos ermöglicht ist. Die Masse beziehungsweise das Massenträgheitsmoment der Kammer ist reduzierbar, wodurch dynamischer gemessen werden kann. Denn durch die Ringnuten ist eine große Oberfläche beim Kammergehäuse erzeugt, welcher eine entsprechende Innenoberfläche des Gehäuses gegenüber sich befindet, insbesondere mit einem Luftspalt konstanter radialer Breite. Auf diese Weise ist ein geringer thermischer Übergangswiderstand realisiert und somit ein Wärmestrom vom Gehäuse her oder umgekehrt berührungslos in das Kammergehäuse eintragbar. Mittels Temperierung des Gehäuses ist somit auch eine Temperierung des Kammergehäuses samt darin befindlichem Öl ermöglicht.

Bei einer vorteilhaften Ausgestaltung ist das Wellenteil drehfest mit der Rotorwelle eines Elektromotors verbunden,
wobei die Rotorwelle mittels zumindest eines weiteren Lagers, insbesondere Kugellagers, relativ zum Tragteil drehbar gelagert ist,
**insbesondere wobei das weitere Lager in einem Gehäuseteil des Elektromotors aufgenommen ist, welches fest, insbesondere drehfest, verbunden ist mit dem Tragteil. Von Vorteil ist dabei, dass das Wellenteil relativ zum Tragteil drehbar gelagert angeordnet ist. Somit bewirkt das vom Wellendichtring erzeugte Drehmoment eine Schwenkbewegung oder Drehbewegung des Kammergehäuses relativ zum Tragteil. Die vom bewirkten Drehwinkel des Kammergehäuses bewirkte Auslenkung des mit der Welle oder dem Kammergehäuse verbundenen Hebelteils ist in einfacher Weise durch einen Sensor erfassbar. Somit stellt die Auslenkung des Hebelteils ein Maß für das Reibmoment dar. Auch wenn beispielsweise durch das Kugellager der Welle der Absolutwert des Reibmoments nicht präzise detektierbar ist, so ist jedoch die relative Änderung des Reibwertes bei Veränderung oder Zusammenbruch des tribologischen Systems, beispielsweise bei Abnutzung des Wellendichtrings und/oder der Lauffläche, klar erkennbar. Außerdem ist auch ein Vergleich bei Austausch des Öls gegen ein anderes Öl ausführbar.**

Bei einer vorteilhaften Ausgestaltung weist die Vorrichtung eine Bremse auf,
wobei die Welle mit einer Bremse verbunden ist, welche direkt oder mittels eines Drehmomentstützteils am Tragteil abgestützt ist,
insbesondere wobei die Welle mit einem ersten Teil der Bremse drehfest verbunden ist und ein zweiter Teil der Bremse direkt oder mittels eines Drehmomentstützteils mit dem Tragteil verbunden ist.

Von Vorteil ist dabei, dass das Reibmoment des mittels des Wellendichtrings und des Öls auf der Lauffläche des Wellenteils gebildeten tribologischen Systems bestimmbar ist, insbesondere relativ zu den durch ein anderes Öl gebildeten tribologischen Systems. Es sind also Drehzahlverläufe mittels des Motors vorgebbar und dann bei einer konstanten Drehzahl ein Reibmoment bestimmbar, wobei dieses Messergebnis vergleichbar ist mit einer ebensolchen Messung unter Verwendung eines anderen Öls. Denn das Lager, insbesondere Kugellager, bewirkt ebenfalls einen Beitrag zum Messergebnis, der aber bei gleicher Drehzahl gleich ist.

Vorteiligerweise ist zur Bestimmung des Messwertes die Bremse lüftbar und somit das Kammergehäuse gegen die Federkraft drehbar gelagert bis Gleichgewicht der vom Federteil erzeugten Federkraft mit dem entsprechend dem Reibmoment auf dem Radialabstand der Verbindungsstelle des Federteils mit dem Hebelteil bewirkten Kraft bewirkt ist.

Zur Durchführung von insbesondere nicht konstanten Drehzahlverläufen ist die Bremse aktivierbar, so dass das Kammergehäuse ruhig bleibt und nicht in Schwingung gerät.

Die Bremse dient dann also zum insbesondere ruhigem Halten des Kammergehäuses.

Bei einer vorteilhaften Ausgestaltung ist mit der Welle ein Hebelteil drehfest verbunden,
wobei das Hebelteil mit einer am Tragteil, insbesondere direkt oder über einen Haltebügel indirekt, abgestützten Rückstellfeder verbunden ist,
wobei ein Sensor zur Erfassung der Auslenkung des Hebelteils aus der Ruhelage der Rückstellfeder vorgesehen ist Von Vorteil ist dabei, dass mittels des Hebelteils eine Hebelwirkung ausnutzbar ist, so dass das Federteil nur einen geringen Rückstellkraftbetrag aufbringen muss, da das Federteil auf einem großen Radialabstand zur Rotorwellenachse anordenbar ist. Außerdem ist ebenso eine Vergrößerung der vom Sensor zu erfassenden Auslenkungswegstrecke bewirkt.

Bei einer vorteilhaften Ausgestaltung ist im Kammergehäuse Öl vorhanden. Von Vorteil ist dabei, dass das tribologische System mit dem jeweiligen Öl untersuchbar ist.

Bei einer vorteilhaften Ausgestaltung weist das Kammergehäuse einen Druckluftanschluss auf. Von Vorteil ist dabei, dass das Öl mit einem Druck beaufschlagbar ist, so dass gegenüber der dem Öl abgewandten Seite des Wellendichtrings ein Überdruck vorgebbar ist.

Bei einer vorteilhaften Ausgestaltung sind am radial äußeren Umfang des Kammergehäuses axial voneinander beabstandete in Umfangsrichtung umlaufende Ringnuten angeordnet,
wobei ein mit dem Tragteil verbundenes Gehäuse an seiner Innenseite in Umfangsrichtung umlaufende, axial voneinander beabstandete Ringnuten aufweist,
wobei eine jeweilige, mittels jeweils zwei zueinander nächstbenachbarten Ringnuten des Kammergehäuses gebildete Erhebung in eine jeweilige am Gehäuse ausgeformte Ringnut hineinragt,
wobei eine jeweilige, mittels jeweils zwei zueinander nächstbenachbarter Ringnuten des Gehäuses gebildete Erhebung in eine jeweilige am Kammergehäuse ausgeformte Ringnut hineinragt,
so dass ein Luftspalt zwischen Gehäuse und Kammergehäuse vorgesehen ist,
insbesondere wobei der Luftspalt in axialer Richtung sich erstreckt und in radialer Richtung beziehungsweise entgegen der radialen Richtung mäandrierend ausgebildet ist, insbesondere wobei der Luftspalt in Umfangsrichtung drehsymmetrisch ist.

Bei einer vorteilhaften Ausgestaltung weist der erste Teil eine Außenverzahnung auf, auf welcher eine axial verschiebbare, aber drehfest mit der Welle verbundener Bremsbelagträger angeordnet ist,
wobei der zweite Teil der Bremse einen Magnetkörper aufweist, in welchem eine Ringwicklung aufgenommen ist, wobei eine Ankerscheibe axial verschiebbar, aber drehfest mit dem Magnetkörper verbunden axial zwischen Magnetkörper und Bremsbelagträger angeordnet ist,
so dass bei Bestromung der Ringwicklung die Ankerscheibe entgegen der von einem am Magnetkörper abgestützten Federteil erzeugten Federkraft zum Magnetkörper hingezogen wird, insbesondere also die Bremse gelüftet wird, und bei Nicht-Bestromung der Ringwicklung die Ankerscheibe von dem Federteil auf eine Bremsfläche gedrückt wird, die an einer Scheibe angeordnet ist, wobei die Scheibe insbesondere mittels Bolzen mit dem Magnetkörper verbunden ist, insbesondere die Bremse also einfällt. Von Vorteil ist dabei, dass die Bremse in einfacher Weise als Haltebremse ausführbar ist. Somit ist die Bremse bei Bestromung der Wicklung lüftbar und fällt mit Beendigung der Bestromung ein. Da die Welle drehfest mit dem Kammergehäuse verbunden ist, bewirkt ein Einfallen der Bremse auch ein Festhalten des Kammergehäuses.

Bei einer vorteilhaften Ausgestaltung sind am radial äußeren Umfang des Gehäuses insbesondere in Umfangsrichtung voneinander regelmäßig beabstandet Temperiereinheiten angeordnet. Von Vorteil ist dabei, dass eine gleichmäßige Verteilung der Temperiereinheiten ein entsprechend gleichmäßiges Temperieren bewirkt. Außerdem ist der radiale Außenumfang des Gehäuses, insbesondere dessen Schnittfläche mit einer Ebene, deren Normale parallel zur Rotorwellenachse ausgerichtet ist, als regelmäßiges Polygon ausführbar und somit eine hohe Festigkeit erreichbar. Die ebenen Flächen des Polygons ermöglichen eine große Kontaktfläche zum Thermoelektrisches Element hin. Somit ist eine hohe Effizienz der Temperiereinheiten erreichbar

Bei einer vorteilhaften Ausgestaltung weist jede Temperiereinheit ein elektrisch betreibbares Thermoelektrisches Element, insbesondere Peltier-Element, auf, wobei das Thermoelektrische Element auf dem Gehäuse aufgebracht ist und auf der vom Gehäuse abgewandten Seite des Thermoelektrischen Elements ein Kühlkörper mit dem Thermoelektrischen Element, insbesondere Peltier-Element, verbunden ist, insbesondere wobei ein Lüfter am Kühlkörper, insbesondere auf der vom Thermoelektrischen Element abgewandten Seite des Kühlkörpers, angeordnet ist. Von Vorteil ist dabei, dass eine einfach handhabbare elektrische Regelung der Temperatur bewirkbar ist.

Bei einer vorteilhaften Ausgestaltung weist das Kammergehäuse ein Ölschauglas auf. Von Vorteil ist dabei, dass Ölverlust einfach erkennbar ist und/oder Unruhe, wie Schwingungsneigung, des Öls während Ausführens der Messung.

Bei einer vorteilhaften Ausgestaltung ist am Kammergehäuse ein Druckluftanschluss angeordnet insbesondere zum Zuführen von Druckluft in den vom Kammergehäuse umgebenen, zumindest teilweise mit Öl befüllten Innenraum, Von Vorteil ist dabei, dass das Öl im Innenraum des Kammergehäuses mit einem Druck beaufschlagbar ist.

Bei einer vorteilhaften Ausgestaltung ist am Kammergehäuse eine Entlüftungseinheit zum Entlüften des Kammergehäuses angeordnet. Von Vorteil ist dabei, dass der Druck in einfacher Weise reduzierbar ist.

Wichtige Merkmale bei dem Prüfstand mit zumindest einer vorgenannten Vorrichtung sind, dass
auf einer Grundplatte ein Elektromotor angeordnet ist, dessen Rotorwelle mit dem Wellenteil der Vorrichtung drehfest verbunden ist,
wobei die Vorrichtung mittels einer axial gerichteten, also parallel zur Rotorwellenachse gerichteten Führungsschiene auf der Grundplatte verschiebbar angeordnet ist. Von Vorteil ist dabei, dass die Vorrichtung bei Abnutzung der Lauffläche des Wellenteils verschiebbar ist und somit eine unbenutzte neue Lauffläche dem Wellendichtring zur Verfügung stellbar ist. außerdem ist zu Montagezwecken die Vorrichtung verschiebbar und daher auch die Zugänglichkeit zum Wellendichtring verbesserbar.

Bei einer vorteilhaften Ausgestaltung ist an der Führungsschiene eine Feststellbremse zum Arretieren der Vorrichtung angeordnet,
insbesondere wobei der Prüfstand einen Rastbolzen aufweist. Von Vorteil ist dabei, dass zur Durchführung der Prüfung des Wellendichtrings die Feststellbremse arretierbar ist.

Bei einer vorteilhaften Ausgestaltung ist die Grundplatte über Gummipuffern auf einem Boden aufgestellt ist. Von Vorteil ist dabei, dass Schwingungen abdämpfbar sind und somit die Prüfung, insbesondere Bestimmung des Reibmoments, störungsarm ausführbar.

Bei einer vorteilhaften Ausgestaltung ist unterhalb des Wellenteils im vom Wellenteil axial überdeckten Bereich ein Auffangbehälter für Öl vorgesehen, insbesondere mit dem Tragteil der Vorrichtung verbunden ist. Von Vorteil ist dabei, dass der Umweltschutz verbessert ist.

Bei einer vorteilhaften Ausgestaltung umfasst der von einer transparenten Wellenabdeckung überdeckte axiale Bereich den vom Wellenteil und den von dem am Motor herausragenden Teilbereich der Rotorwelle überdeckten axialen Bereich. Von Vorteil ist dabei, dass die Prüfung optisch überwachbar ist und das drehende Teil mittels der transparenten Wellenabdeckung berührsicher angeordnet ist.

Weitere Vorteile ergeben sich aus den Unteransprüchen.

Die Erfindung wird nun anhand von schematischen Abbildungen näher erläutert:

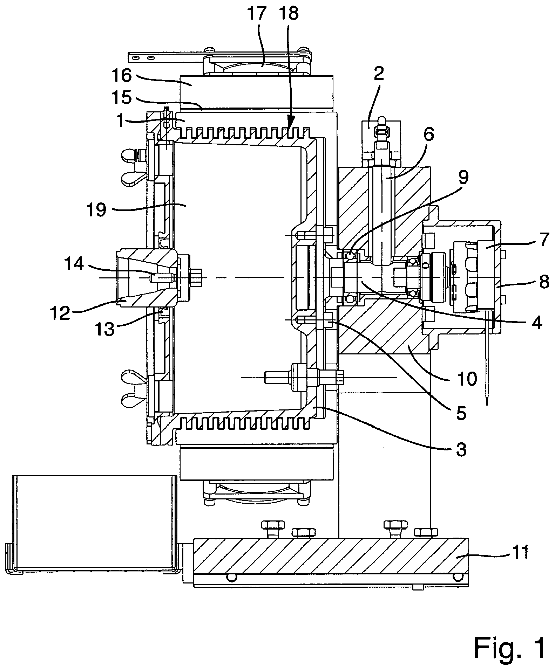

in der Figur 1 ist ein Querschnitt durch eine erfindungsgemäße Prüfvorrichtung eines Prüfstandes für einen Wellendichtring 13 gezeigt.
In der Figur 2 ist die Prüfvorrichtung in Schrägansicht dargestellt.
In der Figur 3 ist der zwei solche Prüfvorrichtungen aufweisende Prüfstand dargestellt.

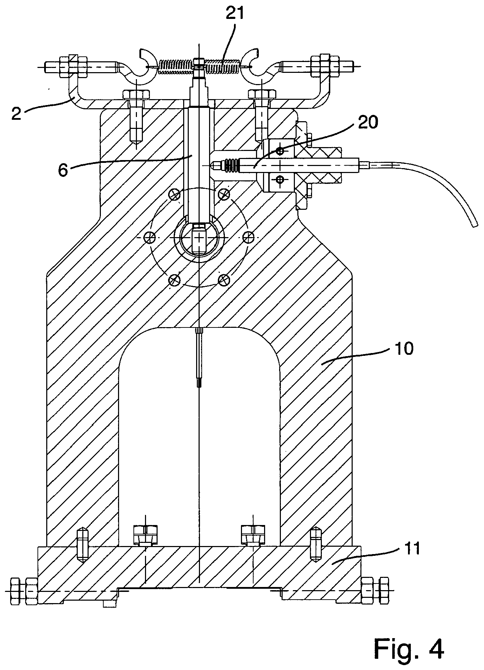

In der Figur 4 ist ein Längsschnitt durch die Prüfvorrichtung dargestellt.

Wie in den Figuren dargestellt, weist der Prüfstand eine Grundplatte 37 auf, auf der ein Elektromotor 30 angeordnet ist, dessen Rotorwelle axial beidseitig herausgeführt ist und jeweils eine Prüfvorrichtung antreibt. Beide Prüfvorrichtungen dienen zur Prüfung eines Wellendichtrings, wobei ein Öl 19 vorgesehen ist. Somit wird also die Wechselwirkung des Öls mit dem Wellendichtring geprüft.

Die beiden Prüfvorrichtungen sind linear verfahrbar relativ zum Motor 30.

An jedem axialen Endbereich der Rotorwelle des Motors 30 ist jeweils ein Wellenteil 12 drehfest mit der Rotorwelle verbunden, insbesondere mittels einer jeweiligen Schraube 14.

Das Wellenteil weist an seinem äußeren Umfang eine insbesondere fein bearbeitete Lauffläche für den jeweiligen Wellendichtring 13 auf.

An der Grundplatte 37 ist eine Führungsschiene 33 angeordnet, so dass die Prüfvorrichtung mittels eines von ihr umfassten Schlittenteils 11 in axialer Richtung linear verschiebbar ist. Auf diese Weise ist nach einem jeweiligen Testlauf die Prüfvorrichtung verschiebbar und der Wellendichtring 13 auf einem anderen Bereich der Lauffläche betreibbar. Es sind also mehrere Testläufe mit jeweils unverbrauchten Laufflächen durchführbar.

Mittels einer Feststellbremse 36, insbesondere für die lineare relative Bewegung der Prüfvorrichtung zum Motor 30, ist die Prüfvorrichtung während des jeweiligen Testlaufs zur Grundplatte 37 hin arretierbar. Zum Zwecke des Verschiebens der Prüfvorrichtung ist die Bremse 36 lüftbar.

Der auf der Lauffläche angeordnete Wellendichtring 13 ist in einem Gehäuseteil eines Kammergehäuses 3 aufgenommen, insbesondere in einem Drehflanschteil des Kammergehäuses. Mittels des Gehäuseteils ist ein weiteres Gehäuseteil des Kammergehäuses 3 verschließbar, so dass im Innenraum Öl 19 einbringbar ist.

Das Kammergehäuse 3 der jeweiligen Prüfvorrichtung ist mit einer Welle 4 fest verbunden, insbesondere schraubverbunden mittels Schrauben 5.

Die Welle 4 ist mittels eines Lagers 9 in einem Tragteil 10 gelagert, dass entweder fest verbunden ist insbesondere schweißverbunden ist, mit dem Schlittenteil 11 oder einstückig mit diesem ausgebildet ist.

Die Welle 4 ist an ihrem vom Motor 30 abgewandten axialen Endbereich mit einer elektromagnetisch betätigbaren Bremse 7, insbesondere einem drehbaren Teil der Bremse 7, verbunden. Der stationäre Teil der Bremse 7 ist mit einem Drehmomentstützteil 8 zum Ableiten von Drehmoment fest verbunden, wobei das Drehmomentstützteil 8 die Bremse gehäusebildend umgibt. Der stationäre Teil der Bremse 7 kann aber auch selbst als Bremsengehäuse ausgebildet sind.

Das Drehmomentstützteil 8 ist mit dem Tragteil 10 fest verbunden, insbesondere schraubverbunden.

Somit ist also das Kammergehäuse 3 schwenkbar angeordnet, wobei die Schwenkbewegung mittels der Bremse 8 unterbindbar ist, wenn diese eingefallen ist.

Zur Bestimmung des Reibmoments des Wellendichtrings 13 bei einer bestimmten Drehzahl des Wellenteils 12 wird die Bremse 8 jedoch gelüftet.

An der Welle 4 ist ein radial hervorragendes Hebelteil 6 drehfest verbunden.

Am Tragteil ist ein Haltebügel 2 fest verbunden, insbesondere angeschraubt, in welchem ein Federteil 21 gespannt gehalten ist. Vorzugsweise sind hierzu die beiden Enden des Federteils 21 von Haken 22 gehalten, die mit dem Haltebügel 2 verbunden sind. Im mittleren Bereich des Federteils 21 ist das Hebelteil 6 mit dem federteil 21 verbunden.

Vorzugsweise ist das Federteil 21 als Spiralfeder ausgeführt.

Bei verschwindender Drehzahl des Wellenteile 12 befindet sich das Hebelteil 6 in Ruhelage. Abhängig von der Drehzahl und der Drehrichtung wird das Hebelteil 6 ausgelenkt bis das von dem Federteil 21 über das Hebelteil 6 bewirkte Drehmoment dem Reibmoment des Wellendichtrings 13 auf der Lauffläche des Wellenteils 12 entspricht. Dabei ist das Lager 9 als Kugellager ausgeführt und bewirkt somit eine geringfügige Verfälschung der Auslenkung.

Die Auslenkung des Hebelteils 6 wird vom Sensor 20 in tangentialer Richtung gemessen. Der Sensor 20 ist dabei vorzugswese als induktiver Sensor ausgeführt, so dass keine wesentliche Störung des Messergebnisses von ihm bewirkt wird.

Somit ist also die vom Sensor 20 erfasste Auslenkung des Hebelteils 6 ein Maß für das vom Wellendichtring erzeugte Reibmoment.

Entsprechend der Auslenkung ist das Kammergehäuse 3 geschwenkt, also gedreht.

Das Kammergehäuse 3 weist an seinem radial äußeren Umfang Ringnuten auf. Die Ringnuten sind in Umfangsrichtung ununterbrochen ausgeführt. Axial zwischen jeweils zwei zueinander nächstbenachbarten Ringnuten ist jeweils eine ebenfalls in Umfangsrichtung insbesondere ununterbrochen umlaufende Erhebung vorgesehen.

Radial ist das Kammergehäuse 3 von einem Gehäuse 1 umgeben, welches mit dem Tragteil 10 und/oder Schlittenteil 11 verbunden, insbesondere schraubverbunden ist.

Das Gehäuse 1 ist hohl ausgeführt und weist an seinem Innenumfang Ringnuten auf, die ebenfalls in Umfangsrichtung umlaufen, so dass zwischen jeweils zwei zueinander nächstbenachbarten Ringnuten eine jeweilige nach radial innen hervorragende Erhebung ausgeformt ist.

Eine jeweilige der am Gehäuse 1 ausgeformten Erhebungen ragt in eine jeweilige Ringnut des Kammergehäuses 3 hinein. Ebenso ragt eine jeweilige am Kammergehäuse 3 ausgeformte Erhebung in eine jeweilige Ringnut des Gehäuses 1 hinein.

Auf diese Weise ist ein Luftspalt 18 gebildet, welcher in axialer Richtung mäanderförmig verläuft, insbesondere wobei der Mäander in radialer Richtung und in axialer Richtung sich erstreckt. Der luftspalt 18 beansprucht ein Volumen wie ein Rotationskörper. Daher ist der mäanderartige Verlauf in einer Schnittebene, welche die Drehachse der Rotorwelle enthält unabhängig vom Umfangswinkel der Schnittebene.

Der Luftspalt 18 ist derart eng bemessen und mit einem derartigen Mäander ausgeführt, dass ein geringer Wärmeübergangswiderstand zwischen Kammergehäuse 3 und Gehäuse 1 besteht. Beide sind dabei aus Metall gefertigt.

Am radialen Außenumfang des Gehäuses 1 ist ein Thermoelektrisches Element, insbesondere Peltier-Element, aufgebracht, welches bei elektrischer Speisung einen Wärmestrom in radialer Richtung oder entgegen der radialen Richtung bewirkt.

Zur Erhöhung der Effizienz ist auf dem Thermoelektrisches Element 15 an seiner vom Gehäuse 1 abgewandten Seite ein Kühlkörper 16 angeordnet, auf dem ein Lüfter 17 angeordnet ist, so dass der Wärmestrom von der oder in die Umgebung geleitet wird.

Somit ist je nach der Polarität der elektrischen Versorgungsspannung des Thermoelektrisches Elements 15
ein Erwärmen oder ein Abkühlen des innerhalb des Kammergehäuses sich befindenden Öls 19 bewirkbar. Die Prüfung des Wellendichtrings 13 ist also bei verschiedenen Temperaturen durchführbar.

Die Temperatur ist somit auch bei Schwenkbewegung des Kammergehäuses 3 vom Thermoelektrisches Element 15 auf einen Temperaturwert einstellbar beziehungsweise auf einen Temperaturwert hinregelbar.

Vorzugsweise ist die Schraube 14 mit ihrem Gewindeabschnitt in eine Gewindebohrung der Rotorwelle eingeschraubt, so dass der Schraubenkopf der Schraube 14 auf eine axial zwischen dem Wellenteil 12 und dem Schraubenkopf angeordnete Lochscheibe drückt, welche wiederum auf das Wellenteil 12 drückt, deren konische Ausnehmung auf die an ihrem axialen Endbereich entsprechend konisch geformte Rotorwelle drückt.

Sobald die Drehrichtung oder die Drehzahl der Rotorwelle geändert wird, wird vorzugsweise die Bremse 8 aktiviert. Nur bei genügend langanhaltender konstanter Drehzahl der Rotorwelle wird die Bremse 8 gelüftet und das Reibmoment bestimmt.

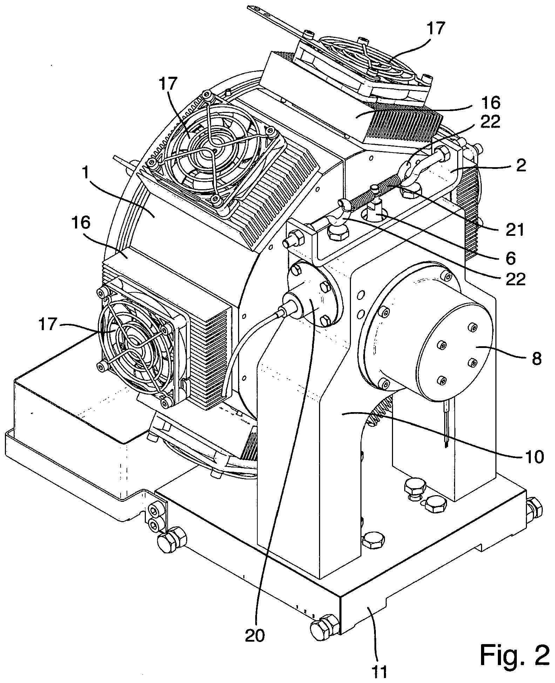

Wie in Figur 2 dargestellt, sind am Außenumfang des Gehäuses 1 solche Thermogeneratoren 15 in Umfangsrichtung voneinander regelmäßig beabstandet angeordnet, wobei auf jedem Thermogenerator ein Kühlkörper aufgesetzt ist und ebenfalls ein Lüfter.

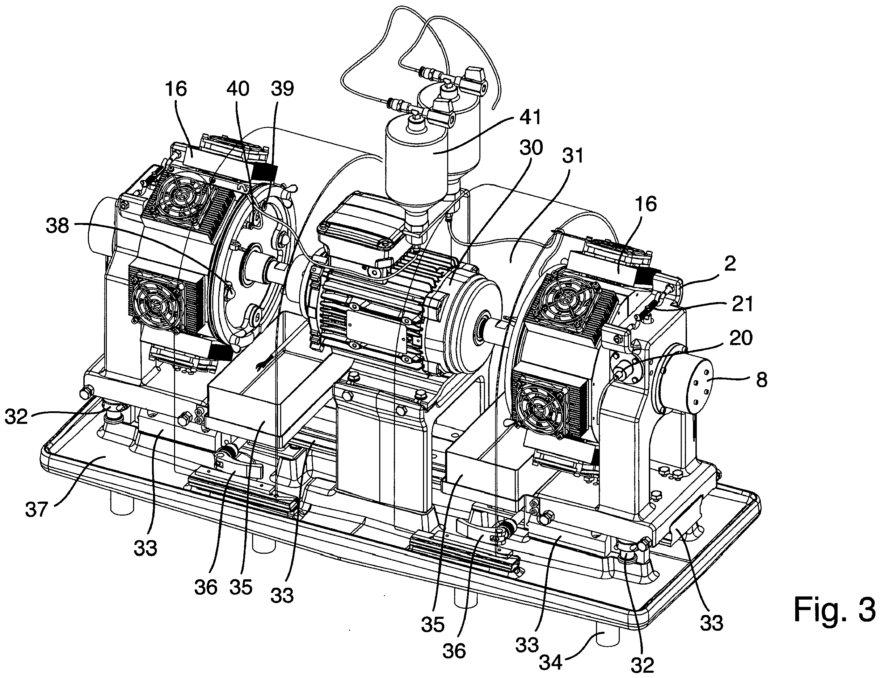

Wie in Figur 3 dargestellt, sind die beiden Prüfvorrichtungen vom selben Motor 30 angetrieben, da die Rotorwelle aus dem Motor axial beidseitig herausragt. Somit sind immer zwei Wellendichtringe gleichzeitig prüfbar.

Mittels den auf der Grundplatte 37 angeordneten Führungsschienen sind die Prüfvorrichtungen verschiebbar angeordnet, so dass durch Verschiebung der Prüfvorrichtungen relativ zum Motor mehrere unbenutzte Laufflächen der beiden Wellenteile 12 der Prüfvorrichtungen zur Verfügung stellbar sind.

Die Grundplatte 37 ist über Gummipuffer 34 aufgestellt, insbesondere so dass Schwingungen abgedämpft werden.

Mittels der auf der Grundplatte 37 als Feststellbremse ausgeführten Bremsen 36 ist die Prüfvorrichtung fixierbar.

Im Kammergehäuse 3 ist ein Ölschauglas 38 vorgesehen.

Eine transparente Abdeckung 31 überdeckt den axialen Bereich, welcher vom Wellenteil 12 und vom aus dem Motor 30 herausragenden Teil der Rotorwelle überdeckt wird. Die Abdeckung 31 umgibt diesen axialen Bereich in Umfangsrichtung bis zur Grundplatte 37.

Das Kammergehäuse 3 umgibt das Öl 19 dicht. Es ist also hermetisch abgeschlossen. Der für die Prüfung vorgesehene Druck, insbesondere Überdruck zum Umgebungsdruck, wird mittels Druckluft bewirkt, wobei die Druckluft zuerst durch einen Ölabscheider 41 und dann zum Druckluftanschluss 40 des jeweiligen Kammergehäuses geführt wird. Am Kammergehäuse 3 ist auch eine Entlüftung 39 zum Abbauen des Überdrucks vorgesehen.

Mittels an den Schlittenteilen 11 angeordneten Rastbolzen sind diskret vorgesehene Linearpositionen einstellbar.

### Bezugszeichenliste

1 Gehäuse
2 Haltebügel
3 Kammergehäuse
4 Welle
5 Schraube
6 Hebelteil
7 Bremse, insbesondere elektrisch betätigbare Bremse
8 Drehmomentstützteil, insbesondere Drehmomentableitteil
9 Lager
10 Tragteil
11 Schlittenteil
12 Wellenteil
13 Wellendichtring
14 Schraube
15 Thermoelektrisches Element
16 Kühlkörper
17 Lüfter
18 Luftspalt
19 Öl
20 Wegsensor
21 Federteil
30 Elektromotor
31 transparente Abdeckung
32 Rastbolzen
33 Führungsschiene
34 Gummipuffer
35 Auffangbehälter
36 Linearbremse
37 Grundplatte
38 Ölschauglas
39 Entlüftung
40 Druckluftanschluss
41 Ölabscheider

## Patentansprüche

1. **Prüfvorrichtung zum Prüfen eines Wellendichtrings (13),**
aufweisend
- ein Kammergehäuse (3),
- eine Welle (4),
- ein Lager (9), insbesondere Kugellager,
- ein Tragteil (10),
- ein Wellenteil (12), insbesondere ein von einem Motor drehbaren Wellenteil (12),
**wobei** der auf dem Wellenteil (12) angeordnete, insbesondere laufende, Wellendichtring (13) im Kammergehäuse (3) aufgenommen ist,
wobei das Kammergehäuse (3) drehfest mit der Welle (4) verbunden ist, insbesondere einstückig mit der Welle (4) ausgebildet ist,
wobei die Welle (4) mittels des Lagers (9) drehbar gelagert ist,
wobei das Lager (9) aufgenommen ist im Tragteil (10),
**dadurch gekennzeichnet, dass**
am radial äußeren Umfang des Kammergehäuses (3) axial voneinander beabstandete in Umfangsrichtung umlaufende ununterbrochen Ringnuten angeordnet sind,
wobei ein mit dem Tragteil (10) verbundenes Gehäuse (1) an seiner Innenseite in Umfangsrichtung umlaufende, axial voneinander beabstandete Ringnuten aufweist,
wobei axial zwischen jeweils zwei zueinander nächstbenachbarten Ringnuten des Kammergehäuses jeweils eine ebenfalls in Umfangsrichtung ununterbrochen umlaufende Erhebung vorgesehen ist,
wobei eine jeweilige, mittels jeweils zwei zueinander nächstbenachbarten Ringnuten des Kammergehäuses (3) gebildete Erhebung in eine jeweilige am Gehäuse (1) ausgeformte Ringnut hineinragt,
wobei das Kammergehäuse (3) radial von dem Gehäuse (1) umgeben ist, welches mit dem Tragteil (10) und/oder Schlittenteil (11) verbunden ist,
wobei das Gehäuse (1) hohl ausgeführt ist und an seinem innenumfang die Ringnuten aufweist, die ebenfalls in Umfangsrichtung umlaufen, so dass zwischen jeweils zwei zueinander nächstbenachbarten Ringnuten eine jeweilige nach radial Innen hervorragende Erhebung ausgeformt ist,
wobei eine jeweilige, mittels jeweils zwei zueinander nächstbenachbarten Ringnuten des Gehäuses (1) gebildete Erhebung in eine jeweilige am Kammergehäuse (3) ausgeformte Ringnut hineinragt,
so dass ein Luftspalt (18) zwischen Gehäuse (1) und Kammergehäuse (3) vorgesehen ist,
wobei der Luftspalt (18) derart eng bemessen und mit einem derartigen Mäander ausgeführt ist, dass ein geringer Wärmeübergangswiderstand zwischen Kammergehäuse (3) und Gehäuse (1) besteht, wobei das Gehäuse(1) und das Kammergehäuse (3) aus Metall gefertigt sind,
insbesondere wobei der Luftspalt (18) in axialer Richtung sich erstreckt und in radialer Richtung beziehungsweise entgegen der radialen Richtung mäandrierend ausgebildet ist,
insbesondere wobei der Luftspalt (18) in Umfangsrichtung drehsymmetrisch ist.

2. Vorrichtung nach Anspruch 1,
**dadurch gekennzeichnet, dass**
**das Wellenteil (12) drehfest mit der Rotorwelle eines Elektromotors (30) verbunden ist,**
**wobei die Rotorwelle mittels zumindest eines weiteren Lagers (9), insbesondere Kugellagers, relativ zum Tragteil (10) drehbar gelagert ist,**
**insbesondere wobei das weitere Lager (9) in einem Gehäuseteil des Elektromotors (30) aufgenommen ist, welches fest, insbesondere drehfest, verbunden ist mit dem Tragteil (10).**

3. Vorrichtung nach mindestens einem der vorangegangenen Ansprüche,
**dadurch gekennzeichnet, dass**
mit der Welle (4) ein Hebelteil (6) drehfest verbunden ist,
wobei das Hebelteil (6) mit einer am Tragteil (10), insbesondere direkt oder über einen Haltebügel (2) indirekt, abgestützten Rückstellfeder verbunden ist,
wobei ein Sensor zur Erfassung der Auslenkung des Hebelteils (6) aus der Ruhelage der Rückstellfeder vorgesehen ist.

4. Vorrichtung nach mindestens einem der vorangegangenen Ansprüche,
**dadurch gekennzeichnet, dass**
im Kammergehäuse (3) Öl vorhanden ist.

5. Vorrichtung nach mindestens einem der vorangegangenen Ansprüche,
**dadurch gekennzeichnet, dass**
das Kammergehäuse (3) einen Druckluftanschluss (40) aufweist.

6. Vorrichtung nach mindestens einem der vorangegangenen Ansprüche,
**dadurch gekennzeichnet, dass**
**die Vorrichtung eine Bremse (7) aufweist,**
**wobei die Welle (4) mit einer Bremse (7) verbunden ist, weiche direkt oder mittels eines Drehmomentstützteils (8) am Tragteil (10) abgestützt ist,**
**insbesondere wobei die Welle (4) mit einem ersten Teil der Bremse (7) drehfest verbunden ist und ein zweiter Teil der Bremse (7) direkt oder mittels eines Drehmomentstützteils (8) mit dem Tragteil (10) verbunden ist.**

7. Vorrichtung **nach Anspruch 6**,
**dadurch gekennzeichnet, dass**
der erste Teil eine Außenverzahnung aufweist, auf weicher eine axial verschiebbare, aber drehfest mit der Welle (4) verbundener Bremsbelagträger angeordnet ist,
wobei der zweite Teil der Bremse (7) einen Magnetkörper aufweist, in welchem eine Ringwicklung aufgenommen ist, wobei eine Ankerscheibe axial verschiebbar, aber drehfest mit dem Magnetkörper verbunden axial zwischen Magnetkörper und Bremsbelagträger angeordnet ist,
so dass bei Bestromung der Ringwicklung die Ankerscheibe entgegen der von einem am Magnetkörper abgestützten Federteil erzeugten Federkraft zum Magnetkörper hingezogen wird, insbesondere also die Bremse (7) gelüftet wird, und bei Nicht-Bestromung der Ringwicklung die Ankerscheibe von dem Federteil auf eine Bremsfläche gedrückt wird, die an einer Scheibe angeordnet ist, wobei die Scheibe insbesondere mittels Bolzen mit dem Magnetkörper verbunden ist, insbesondere die Bremse (7) also einfällt

8. Vorrichtung nach mindestens einem der vorangegangenen Ansprüche,
**dadurch gekennzeichnet, dass**
am radial äußeren Umfang des Gehäuses (1) insbesondere in Umfangsrichtung voneinander regelmäßig beabstandet Temperiereinheiten angeordnet sind.

9. Vorrichtung nach mindestens einem der vorangegangenen Ansprüche,
**dadurch gekennzeichnet, dass**
jede Temperiereinheit ein elektrisch betreibbares Thermoelektrisches Element, insbesondere Peltier-Element, aufweist, wobei das Thermoelektrische Element auf dem Gehäuse (1) aufgebracht ist und auf der vom Gehäuse (1) abgewandten Seite des Thermoelektrischen Elements ein Kühlkörper (16) mit dem Thermoelektrischen Element (15), insbesondere Peltier-Element, verbunden ist, insbesondere wobei ein Lüfter (17) am Kühlkörper (16), insbesondere auf der vom Thermoelektrischen Element abgewandten Seite des Kühlkörpers (16), angeordnet ist.

10. Vorrichtung nach mindestens einem der vorangegangenen Ansprüche,
**dadurch gekennzeichnet, dass**
das Kammergehäuse (3) ein Ölschauglas (38) aufweist
und/oder dass
am Kammergehäuse (3) ein Druckluftanschluss (40) angeordnet ist insbesondere zum Zuführen von Druckluft in den vom Kammergehäuse (3) umgebenen, zumindest teilweise mit Öl befüllten Innenraum,
und/oder dass
am Kammergehäuse (3) eine Entlüftungseinheit zum Entlüften des Kammergehäuses (3) angeordnet ist.

11. Prüfstand mit zumindest einer Vorrichtung nach mindestens einem der vorangegangenen Ansprüche,
**dadurch gekennzeichnet, dass**
auf einer Grundplatte (37) ein Elektromotor (30) angeordnet ist, dessen Rotorwelle mit dem Wellenteil (12) der Vorrichtung drehfest verbunden ist,
wobei die Vorrichtung mittels einer axial gerichteten, also parallel zur Rotorwellenachse gerichteten Führungsschiene (33) auf der Grundplatte (37) verschiebbar angeordnet ist.

12. Prüfstand nach Anspruch 11,
**dadurch gekennzeichnet, dass**
an der Führungsschiene (33) eine Feststellbremse zum Arretieren der Vorrichtung angeordnet ist,
insbesondere wobei der Prüfstand einen Rastbolzen (32) aufweist.

13. Prüfstand nach Anspruch 12 oder 11,
**dadurch gekennzeichnet, dass**
die Grundplatte (37) über Gummipuffern (34) auf einem Boden aufgestellt ist.

14. Prüfstand nach einem der Ansprüche 11 bis 13,
**dadurch gekennzeichnet, dass**
unterhalb des Wellenteils im vom Wellenteil (12) axial überdeckten Bereich ein Auffangbehälter (35) für Öl vorgesehen ist, insbesondere mit dem Tragteil (10) der Vorrichtung verbunden ist.

15. Prüfstand nach einem der Ansprüche 11 bis 14,
**dadurch gekennzeichnet, dass**
der von einer transparenten Wellenabdeckung überdeckte axiale Bereich den vom Wellenteil (12) und den von dem am Motor herausragenden Teilbereich der Rotorwelle überdeckten axialen Bereich umfasst.

## Claims

1. Testing device for testing a shaft sealing ring (13), comprising
- a chamber housing (3),
- a shaft (4),
- a bearing (9), in particular a ball bearing,
- a supporting part (10),
- a shaft part (12), in particular a shaft part (12) that can be rotated by a motor,
the in particular continuous shaft sealing ring (13) arranged on the shaft part (12) being received in the chamber housing (3),
the chamber housing (3) being connected to the shaft (4) for conjoint rotation, in particular being formed in one piece with the shaft (4),
the shaft (4) being rotatably mounted by means of the bearing (9),
the bearing (9) being received in the supporting part (10),
**characterised in that**
annular grooves that are axially spaced apart from one another and run continuously in an encircling manner in the circumferential direction are arranged on the radially outer circumference of the chamber housing (3),
a housing (1) connected to the supporting part (10) having, on its inside, axially spaced-apart annular grooves that run in an encircling manner in the circumferential direction,
a protrusion that likewise runs continuously in an encircling manner in the circumferential direction being provided in each case axially between each two closest annular grooves,
a respective protrusion formed by means of each two closest annular grooves of the chamber housing (3) protruding into a respective annular groove formed on the housing (1), the chamber housing (3) being radially enclosed by the housing (1), which is connected to the supporting part (10) and/or a carriage part (11),
the housing (1) being hollow and having, on its inner circumference, the annular grooves that likewise run in an encircling manner in the circumferential direction such that a respective, radially inwardly projecting protrusion is formed between each two closest annular grooves, a respective protrusion formed by means of each two closest annular grooves of the housing (1) protruding into a respective annular groove formed on the chamber housing (3) such that an air gap (18) is provided between the housing (1) and the chamber housing (3),
the air gap (18) being so narrow and configured having such a meander that there is a low heat transfer resistance between the chamber housing (3) and the housing (1), the housing (1) and the chamber housing (3) being made of metal,
the air gap (18) in particular extending in the axial direction and being configured in a meandering form in the radial direction and counter to the radial direction,
the air gap (18) in particular being rotationally symmetrical in the circumferential direction.

2. Device according to claim 1,
**characterised in that**
the shaft part (12) is connected to the rotor shaft of an electric motor (30) for conjoint rotation,
the rotor shaft being mounted rotatably relative to the supporting part (10) by means of at least one additional bearing (9), in particular a ball bearing,
the additional bearing (9) in particular being received in a housing part of the electric motor (30), which housing part is rigidly connected to the supporting part (10), in particular connected thereto for conjoint rotation.

3. Device according to at least one of the preceding claims,
**characterised in that**
a lever part (6) is connected to the shaft (4) for conjoint rotation,
the lever part (6) being connected to a return spring that is supported, in particular either directly or indirectly by way of a retaining bracket (2), on the supporting part (10),
a sensor being provided for detecting when the lever part (6) is displaced out of the rest position of the return spring.

4. Device according to at least one of the preceding claims,
**characterised in that**
oil is present in the chamber housing (3).

5. Device according to at least one of the preceding claims,
**characterised in that**
the chamber housing (3) has a compressed-air port (40).

6. Device according to at least one of the preceding claims,
**characterised in that**
the device has a brake (7),
the shaft (4) being connected to a brake (7) that is supported, either directly or by means of a torque-support part (8), on the supporting part (10),
the shaft (4) in particular being connected to a first part of the brake (7) for conjoint rotation, and a second part of the brake (7) being connected to the supporting part (10) either directly or by means of a torque-support part (8).

7. Device according to claim 6,
**characterised in that**
the first part has external teeth, on which there is arranged a brake lining carrier that is axially displaceable but connected to the shaft (4) for conjoint rotation,
the second part of the brake (7) has a magnet member in which an annular winding is received, an armature disc being arranged axially between the magnet member and the brake lining carrier so as to be axially displaceable but connected to the magnet member for conjoint rotation,
such that when the annular winding is energised the armature disc is pulled towards the magnet member counter to the spring force generated by a spring part supported on the magnet member, in particular therefore the brake (7) is released, and when the angular winding is not energised the armature disc is pushed by the spring part onto a braking surface arranged on a disc, the disc in particular being connected to the magnet member by means of bolts, in particular therefore the brake (7) is applied.

8. Device according to at least one of the preceding claims,
**characterised in that**
temperature-control units are arranged on the radially outer circumference of the housing (1), in particular regularly spaced apart from one another in the circumferential direction.

9. Device according to at least one of the preceding claims,
**characterised in that**
each temperature-control unit has an electrically operable thermoelectric element, in particular a Peltier element, the thermoelectric element being mounted on the housing (1) and a cooling member (16) being connected to the thermoelectric element (15), in particular the Peltier element, on the side of the thermoelectric element facing away from the housing (1), a fan (17) in particular being arranged on the cooling member (16), in particular on the side of the cooling member (16) facing away from the thermoelectric element.

10. Device according to at least one of the preceding claims,
**characterised in that**
the chamber housing (3) has an oil-level sight glass (38)
and/or **in that**
a compressed-air port (40) is arranged on the chamber housing (3), in particular for supplying compressed air into the inner chamber that is enclosed by the chamber housing (3) and at least partly filled with oil
and/or **in that**
a bleeding unit for bleeding the chamber housing (3) is arranged on the chamber housing (3).

11. Test bench comprising at least one device according to at least one of the preceding claims,
**characterised in that**
an electric motor (30) is arranged on a base plate (37), the rotor shaft of said motor being connected to the shaft part (12) of the device for conjoint rotation,
the device being arranged on the base plate (37) so as to be displaceable by means of an axially oriented guide rail (33), i.e. a guide rail oriented in parallel with the rotor shaft axis.

12. Test bench according to claim 11,
**characterised in that**
a locking brake for locking the device is arranged on the guide rail (33),
the test bench in particular having a latching bolt (32).

13. Test bench according to claim 12 or claim 11,
**characterised in that**
the base plate (37) is placed on a floor by way of rubber buffers (34).

14. Test bench according to any of claims 11 to 13,
**characterised in that**
underneath the shaft part, in the region covered axially by the shaft part (12), a collection container (35) for oil is provided, which in particular is connected to the supporting part (10) of the device.

15. Test bench according to any of claims 11 to 14,
**characterised in that**
the axial region covered by a transparent shaft cover encompasses the axial region covered by the shaft part (12) and the axial region covered by the rotor-shaft portion protruding out of the motor.

## Revendications

1. Dispositif testeur dévolu au contrôle d'une bague (13) d'étanchement d'arbre,
comprenant
- un coffret (3),
- un arbre (4),
- un palier (9), en particulier un roulement à billes,
- une partie de support (10),
- un bout d'arbre (12), en particulier un bout d'arbre (12) auquel un moteur peut imprimer des rotations,
sachant que la bague (13) d'étanchement d'arbre, disposée sur le bout d'arbre (12) et notamment douée de mobilité, est logée dans ledit coffret (3),
lequel coffret (3) est relié à l'arbre (4) avec verrouillage rotatif, et est notamment réalisé d'un seul tenant avec ledit arbre (4),
ledit arbre (4) étant monté à rotation au moyen du palier (9),
lequel palier (9) est logé dans la partie de support (10),
**caractérisé par le fait que**
des rainures annulaires ininterrompues, décrivant un tracé périphérique et espacées les unes des autres dans le sens axial, sont disposées sur le pourtour radialement extérieur du coffret (3),
sachant qu'un boîtier (1) relié à la partie de support (10) est muni, à sa face intérieure, de rainures annulaires décrivant un tracé périphérique et espacées les unes des autres dans le sens axial,
sachant qu'une protubérance, décrivant pareillement un tracé ininterrompu dans le sens périphérique, est prévue à chaque fois, dans le sens axial, entre deux rainures annulaires respectives du coffret les plus rapprochées l'une de l'autre,
une protubérance considérée, respectivement formée au moyen de deux rainures annulaires respectives dudit coffret (3) les plus rapprochées l'une de l'autre, pénétrant alors dans une rainure annulaire respective pratiquée dans le boîtier (1),
ledit coffret (3) étant ceinturé radialement par ledit boîtier (1) relié à la partie de support (10) et/ou partie coulissante (11),
lequel boîtier (1) est de réalisation creuse et est nanti, sur son pourtour intérieur, des rainures annulaires décrivant semblablement un tracé périphérique, ce qui donne à chaque fois naissance, entre deux rainures annulaires respectives les plus rapprochées l'une de l'autre, à une protubérance respective faisant saillie vers l'intérieur dans le sens radial, une protubérance considérée, respectivement formée au moyen de deux rainures annulaires respectives du boîtier (1) les plus rapprochées l'une de l'autre, pénétrant alors dans une rainure annulaire respective ménagée dans le coffret (3),
de sorte qu'un espace interstitiel (18) est réservé entre ledit boîtier (1) et ledit coffret (3), lequel espace interstitiel (18) est conçu avec étroitesse dimensionnelle et sinuosité telles qu'il existe une faible résistance thermique conductive entre ledit coffret (3) et ledit boîtier (1), lesquels boîtier (1) et coffret (3) sont fabriqués en métal,
sachant notamment que l'espace interstitiel (18) s'étend dans le sens axial et est de configuration sinueuse dans la direction radiale, respectivement en sens inverse de ladite direction radiale,
ledit espace interstitiel (18) présentant, en particulier, une symétrie de rotation dans le sens périphérique.

2. Dispositif selon la revendication 1,
**caractérisé par le fait que**
le bout d'arbre (12) est relié, avec verrouillage rotatif, à l'arbre rotorique d'un moteur électrique (30),
ledit arbre rotorique étant monté à rotation, par rapport à la partie de support (10), à l'aide d'au moins un palier supplémentaire (9) et notamment d'un roulement à billes, sachant, en particulier, que ledit palier supplémentaire (9) est logé dans une partie formant carter dudit moteur électrique (30) et reliée rigidement à ladite partie de support (10), notamment avec verrouillage rotatif.

3. Dispositif selon au moins l'une des revendications précédentes,
**caractérisé par le fait**
**qu'**une pièce (6) du type levier est reliée à l'arbre (4) avec verrouillage rotatif,
laquelle pièce (6) du type levier est reliée à un ressort de rappel prenant appui sur la partie de support (10), en particulier directement, ou indirectement par l'intermédiaire d'un étrier de maintien (2),
un capteur étant prévu pour détecter l'excursion pivotante de ladite pièce (6), du type levier, à partir de la position de repos dudit ressort de rappel.

4. Dispositif selon au moins l'une des revendications précédentes,
**caractérisé par le fait que**
de l'huile est présente dans le coffret (3).

5. Dispositif selon au moins l'une des revendications précédentes,
**caractérisé par le fait que**
le coffret (3) est pourvu d'un raccord (40) d'air comprimé.

6. Dispositif selon au moins l'une des revendications précédentes,
**caractérisé par le fait que**
ledit dispositif est muni d'un frein (7),
l'arbre (4) étant relié à un frein (7) prenant appui sur la partie de support (10), directement ou au moyen d'une pièce (8) de support de couples de rotation,
sachant notamment que l'arbre (4) est relié, avec verrouillage rotatif, à une première partie du frein (7) et qu'une seconde partie dudit frein (7) est reliée à ladite partie de support (10), directement ou au moyen d'une pièce (8) de support de couples de rotation.

7. Dispositif selon la revendication 6,
**caractérisé par le fait que**
la première partie est munie d'une denture extérieure sur laquelle est implanté un support de garniture de freinage doué de mobilité axiale, mais relié à l'arbre avec verrouillage rotatif,
la seconde partie du frein (7) étant dotée d'un corps magnétique dans lequel un enroulement annulaire est intégré, sachant qu'un disque d'induit doué de mobilité axiale, mais relié audit corps magnétique avec verrouillage rotatif, est interposé axialement entre ledit corps magnétique et ledit support de garniture de freinage,
de sorte que, lorsque l'enroulement annulaire est alimenté en courant, le disque d'induit est attiré vers le corps magnétique, en opposition à la force élastique engendrée par une pièce élastique prenant appui sur ledit corps magnétique, c'est-à-dire notamment que le frein (7) est désaéré, et de sorte que, lorsque ledit enroulement annulaire n'est pas alimenté en courant, ledit disque d'induit est plaqué, par ladite pièce élastique, contre une surface de freinage située sur un disque, lequel disque est notamment relié audit corps magnétique au moyen de boulons, c'est-à-dire, en particulier, que ledit frein (7) est engagé.

8. Dispositif selon au moins l'une des revendications précédentes,
**caractérisé par le fait que**
des unités de régulation thermique régulièrement espacées les unes des autres, en particulier dans le sens périphérique, sont disposées sur le pourtour radialement extérieur du boîtier (1).

9. Dispositif selon au moins l'une des revendications précédentes,
**caractérisé par le fait que**
chaque unité de régulation thermique est pourvue d'un thermocouple activable électriquement, en particulier d'un élément Peltier, sachant que ledit thermocouple est implanté sur le boîtier (1) et que, du côté du thermocouple pointant à l'opposé dudit boîtier (1), un corps de refroidissement (16) est relié audit thermocouple (15), en particulier audit élément Peltier, un ventilateur (17) étant notamment implanté sur le corps de refroidissement (16), en particulier sur le côté dudit corps de refroidissement (16) qui pointe à l'opposé dudit thermocouple.

10. Dispositif selon au moins l'une des revendications précédentes,
**caractérisé par le fait que**
le coffret (3) est doté d'un voyant d'huile (38) ;
et/ou **par le fait**
**qu'**un raccord (40) d'air comprimé est installé sur ledit coffret (3), notamment en vue d'amener de l'air comprimé dans l'espace interne ceinturé par ledit coffret (3), et au moins partiellement empli d'huile ;
et/ou **par le fait**
**qu'**une unité de ventilation est installée sur ledit coffret (3) aux fins de ventilation dudit coffret (3).

11. Banc d'essai équipé d'au moins un dispositif conforme à au moins l'une des revendications précédentes,
**caractérisé par le fait**
**qu'**un moteur électrique (30), dont l'arbre rotorique est relié avec verrouillage rotatif au bout d'arbre (12) du dispositif, est implanté sur une plaque de base (37),
ledit dispositif étant installé sur ladite plaque de base (37), avec faculté de mouvement, au moyen d'un rail de guidage (33) orienté axialement, c'est-à-dire parallèlement à l'axe dudit arbre rotorique.

12. Banc d'essai selon la revendication 11,
**caractérisé par le fait**
**qu'**un frein d'immobilisation est implanté sur le rail de guidage (33), en vue d'arrêter le dispositif,
ledit banc d'essai étant notamment pourvu d'une cheville encliquetable (32).

13. Banc d'essai selon la revendication 12 ou 11,
**caractérisé par le fait que**
la plaque de base (37) est dressée sur un sol par l'intermédiaire de tampons (34) en caoutchouc.

14. Banc d'essai selon l'une des revendications 11 à 13,
**caractérisé par le fait**
**qu'**un réceptacle (35) collecteur d'huile, notamment relié à la partie de support (10) du dispositif, est prévu au-dessous du bout d'arbre dans la région couverte axialement par ledit bout d'arbre (12).

15. Banc d'essai selon l'une des revendications 11 à 14,
**caractérisé par le fait que**
la région axiale, recouverte d'un couvercle d'arbres transparent, englobe la région axiale couverte par le bout d'arbre (12) et la région partielle de l'arbre rotorique qui fait saillie au-delà du moteur.
